(19) **Europäisches Patentamt / European Patent Office / Office européen des brevets**

(11) **EP 4 261 185 A1**

(12) **EUROPEAN PATENT APPLICATION**
published in accordance with Art. 153(4) EPC

(43) Date of publication:
**18.10.2023  Bulletin 2023/42**

(21) Application number: **21903912.0**

(22) Date of filing: **10.12.2021**

(51) International Patent Classification (IPC):
**C01B 32/162** $^{(2017.01)}$     **B01J 8/02** $^{(2006.01)}$

(52) Cooperative Patent Classification (CPC):
**B01J 8/02; C01B 32/162**

(86) International application number:
**PCT/KR2021/018803**

(87) International publication number:
**WO 2022/124867 (16.06.2022 Gazette 2022/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.12.2020  KR 20200173069**
**02.12.2021  KR 20210171325**
**02.12.2021  KR 20210171323**
**02.12.2021  KR 20210171324**
**02.12.2021  KR 20210171133**

(71) Applicant: **Lg Chem, Ltd.**
**Seoul 07336 (KR)**

(72) Inventors:
• **YOON, Kwang Woo**
  **Daejeon 34122 (KR)**
• **PARK, Hye Jin**
  **Daejeon 34122 (KR)**
• **KIM, Se Hyun**
  **Daejeon 34122 (KR)**
• **HWANG, Doo Sung**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **CARBON NANOTUBE MANUFACTURING APPARATUS AND MANUFACTURING METHOD**

(57)     The present invention relates to a carbon nanotube manufacturing apparatus, and a carbon nanotube manufacturing apparatus according to an embodiment of the present invention comprises: a reactor body formed in a cylindrical shape and having an accommodation portion which is a space in which a reaction occurs; and a distribution plate which is positioned below the accommodation portion of the reactor body and distributes a reaction gas supplied to the accommodation portion. The reactor body comprises: a lower reactor; an upper reactor having a diameter greater than that of the lower reactor; and an expansion portion which connects the upper reactor to the lower reactor and has a gradually expanding diameter.

FIG.1

EP 4 261 185 A1

Description

CROSS-REFERENCE TO RELATED APPLICATION

The present application claims the benefit of the priority of Korean Patent Application Nos. 10-2020-0173069, filed on December 11, 2020, 10-2021-0171323, filed on December 02, 2021, 10-2021-0171324, filed on December 02, 2021, 10-2021-0171325, filed on December 02, 2021, and 10-2021-0171133, filed on December 02, 2021, which are hereby incorporated by reference in their entirety.

TECHNICAL FIELD

The present invention relates to a carbon nanotube manufacturing apparatus and a carbon nanotube manufacturing method.

BACKGROUND ART

Fluidized bed reactors are reactor devices that can be used to perform a variety of multiphase chemical reactions. In such a fluidized bed reactor, a fluid (gas or liquid) reacts with a particulate solid material. Typically, the solid material is a catalyst having a small spherical shape, and the fluid flows at a velocity sufficient to cause the solid material to float. Accordingly, the solid material behaves similarly to the fluid.

Meanwhile, carbon nanostructures (CNSs) refer to nano-sized carbon structures having various shapes, such as nanotubes, nanofibers, fullerenes, nanocones, nanohorns, and nanorods. These carbon nanostructures can be widely utilized in a variety of technical fields because they exhibit various excellent characteristics. As representative carbon nanostructures, carbon nanotubes (CNTs) are tubular materials. Neighboring three carbon atoms are bonded together in a hexagonal honeycomb structure to form a carbon plane, and the carbon plane is rolled in a cylindrical shape to form the tubular carbon nanotubes. The carbon nanotubes exhibit conductive or semiconductive characteristics depending on their structures, that is, the diameters of tubes and can be widely applied in various technical fields. Thus, the carbon nanotubes are in the spotlight as new materials. For example, the carbon nanotubes can be applied to electrodes, electromagnetic wave shields, field emission displays, gas sensors, or the like in electrochemical storage devices such as secondary batteries, fuel cells, or super capacitors.

The carbon nanotubes are typically synthesized at high temperature by reacting hydrocarbons with a catalyst (seed) in a high temperature fluidized bed reactor. Here, the volume growth rate of the carbon nanotubes to the catalyst is 40000% or higher. When determining the size of the reactor by taking the final volume into consideration, most of the reactor is empty because the volume of the catalyst is small, and it is difficult to secure the reaction temperature required for synthesis of the carbon nanotubes.

According to the related art, a fluidized medium has been used in a product so as to secure a temperature. Here, a product used as the fluidized medium grows additionally, and this caused non-uniformity in the product. Also, the entire volume of the reactor could not be used to produce the product.

[Patent Document] Korean Application Publication No. 10-2010-0108599

DISCLOSURE OF THE INVENTION

TECHNICAL PROBLEM

One aspect of the present invention is to provide a carbon nanotube manufacturing apparatus capable of manufacturing carbon nanotubes by using only a catalyst without a fluidized material for securing a temperature of a reactor and a carbon nanotube manufacturing method using the manufacturing apparatus.

TECHNICAL SOLUTION

A carbon nanotube manufacturing apparatus according to an embodiment of the present invention comprises: a reactor body formed in a cylindrical shape and having an accommodation portion which is a space in which a reaction occurs; and a distribution plate which is positioned below the accommodation portion of the reactor body and distributes a reaction gas supplied to the accommodation portion, wherein the reactor body comprises: a lower reactor; an upper reactor having a diameter greater than that of the lower reactor; and an expansion portion which connects the upper reactor to the lower reactor and has a gradually expanding diameter.

Also, a carbon nanotube manufacturing method according to an embodiment of the present invention is a carbon nanotube manufacturing method using the carbon nanotube manufacturing apparatus, the carbon nanotube manufacturing method comprising: inputting a catalyst to the lower reactor (S1); raising inner temperatures of the lower reactor and the upper reactor (S2); and injecting a carbon source gas into the lower reactor (S3), wherein the inner temperature of the upper reactor is higher than the inner temperature of the lower reactor.

A carbon nanotube according to an embodiment of the present invention is manufactured by the carbon nanotube manufacturing apparatus.

## ADVANTAGEOUS EFFECTS

According to the present invention, a usage rate of a reactor may be increased and a difference in qualities between reactants may be reduced, by using only a catalyst through the reactor having a diameter expanding upward without a fluidized material for securing the temperature of the reactor. That is, the catalyst is supplied to a lower reactor having the diameter less than that of the upper reactor, and a reaction gas is supplied from below the lower reactor, and thus, it is easy to secure the reaction temperature. Accordingly, a carbon nanotube may be manufactured by using only the catalyst, and thus, the usage rate of the reactor may be remarkably enhanced, and the difference in qualities between the reactants may be reduced.

Particularly, an expansion portion of the reactor may be formed such that the inclination angle is 5 to 45° with respect to the vertical direction, thereby reducing the flow rate reduction phenomenon at an edge region of the expansion portion. Thus, it is possible to reduce an amount of CNT aggregates generated due to the decrease in flow rate, and accordingly, it is possible to prevent the production amount for CNT from being reduced. Here, the expansion portion of the reactor may be formed such that the inclination angle is 10 to 30° with respect to the vertical direction to minimize the decrease in flow rate, thereby remarkably reducing the amount of CNT aggregates.

Particularly, the diameter ratio of the lower reactor to the upper reactor is formed to be 1/5 to 1/1.5, and thus, it is easier to secure the reaction temperature of the lower reactor, and the reaction gas contact time may be increased, thereby optimizing the production amount and production efficiency for CNT. Here, the diameter ratio of the lower reactor to the upper reactor is formed to be 1/3 to 1/2, and thus, it is remarkably easy to secure the reaction temperature of the lower reactor, and the reaction gas contact time may be further increased, thereby further optimizing the production amount and production efficiency for CNT.

Also, when the carbon nanotube manufacturing method of the present invention is used, low-temperature reaction and high-temperature reaction are sequentially performed in the same reactor, thereby making it possible to producing carbon nanotubes with appropriate material properties while suppressing sintering phenomenon of the catalyst. In addition, the reaction can be performed only with the catalyst without the use of a fluidized medium, and thus, the quality of finally produced carbon nanotubes can be uniformly maintained.

## BRIEF DESCRIPTION OF THE DRAWINGS

FIG. 1 is a perspective view showing principal parts of a carbon nanotube manufacturing apparatus according to an embodiment of the present invention.

FIG. 2 is a perspective view showing concepts of principal parts of a carbon nanotube manufacturing apparatus according to an embodiment of the present invention.

FIG. 3 is a perspective view schematically showing a carbon nanotube manufacturing apparatus according to an embodiment of the present invention.

## MODE FOR CARRYING OUT THE INVENTION

The objects, specific advantages, and novel features of the present invention will be more clearly understood from the following detailed description and preferred embodiments taken in conjunction with the accompanying drawings. In the specification, when reference numerals are given to elements in each drawing, it should be noted that the same elements will be designated by the same reference numerals if possible although they are shown in different drawings. Also, the present invention may be embodied in various different forms, and is not limited to the embodiments described herein. In addition, in describing the present invention, detailed description related to well-known functions will be omitted so as not to unnecessarily obscure subject matters of the present invention.

## Carbon nanotube manufacturing apparatus according to first embodiment

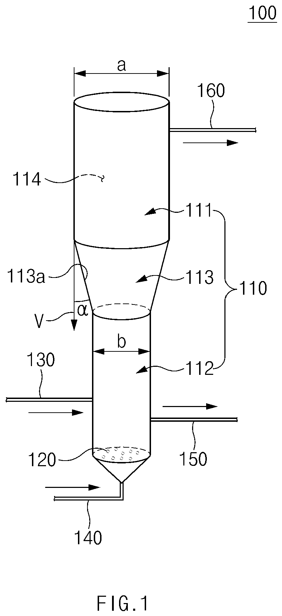

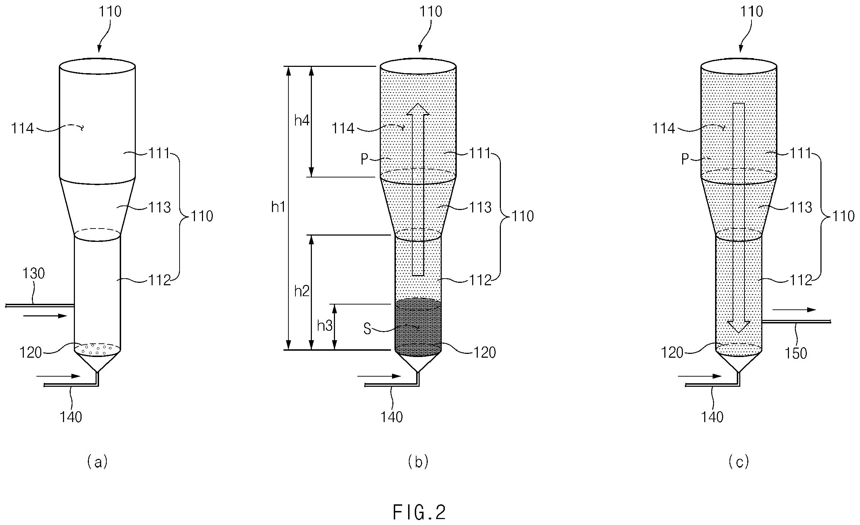

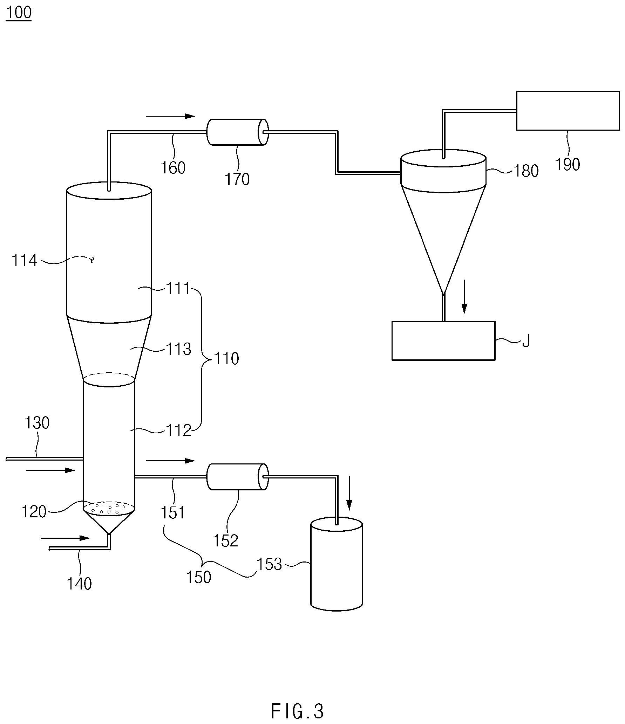

FIG. 1 is a perspective view showing principal parts of a carbon nanotube manufacturing apparatus according to an embodiment of the present invention, FIG. 2 is a perspective view showing concepts of principal parts of a carbon nanotube manufacturing apparatus according to an embodiment of the present invention, and FIG. 3 is a perspective view schematically showing a carbon nanotube manufacturing apparatus according to an embodiment of the present invention.

Referring to FIGS. 1 to 3, a carbon nanotube manufacturing apparatus 100 according to a first embodiment of the present invention is a carbon nanotube manufacturing apparatus 100 comprising: a reactor body 110 having an accommodation portion 114; and a distribution plate 120 for distributing a reaction gas supplied to the accommodation portion 114 of the reactor body 110. The reactor body 110 comprises a lower reactor 112, an upper reactor 111, and an expansion portion 113. Also, the carbon nanotube manufacturing apparatus 100 according to the first embodiment of the present invention may further comprise: a catalyst supply unit 130 for supplying a catalyst S; a gas supply unit 140 for supplying the reaction gas; a collection unit 150 for collecting a reactant P; and a gas discharge unit 160 for discharging a gas.

In more detail, referring to FIG. 1, the accommodation portion 114, which is a space in which a reaction occurs, may be formed inside the reactor body 110. Here, the reactor body 110 may be formed in a cylindrical shape.

The reactor body 110 may comprise: the upper reactor 111 having a diameter greater than that of the lower reactor 112; and the expansion portion 113 which connects the upper reactor 111 to the lower reactor 112 and has a gradually expanding diameter.

Referring to FIG. 1 and (b) of FIG. 2, a height h1 of the accommodation portion 114, which is the inner entire height of the reactor body 110, may be formed to be, for example, 1 m to 10 m, but the height h1 of the accommodation portion 114 of the present invention is not necessarily limited thereto.

A diameter a of the upper reactor 111 may be formed to be, for example, 2 m or less. Particularly, the diameter a of the upper reactor 111 may be formed to be 0.4 to 2 m. However, the diameter a of the upper reactor 111 of the present invention is not necessarily limited thereto.

A diameter b of the lower reactor 112 may be formed to be, for example, 1/2 or less of the diameter a of the upper reactor 111. Here, specifically, the diameter b of the lower reactor 112 may be formed to be, for example, 1/5 to 1/2 of the diameter a of the upper reactor 111.

Here, the diameter b of the lower reactor 112 is formed to be less than or equal to 1/2, which is the upper limit value, of the diameter a of the upper reactor 111, and thus, there is an effect of making it possible to secure a temperature.

Also, the diameter b of the lower reactor 112 is formed to be greater than or equal to 1/5, which is the lower limit value, of the diameter a of the upper reactor 111, and thus, there is an effect of preventing particle deviation. Particularly, when a gas flow rate increases, particles deviate from the lower reactor 112 and moves to the upper reactor 111. When the gas flow rate decreases, there is a problem that catalyst/CNT circulation does not occur. For the catalyst, typically, the particle deviation occurs when linear velocity of gas is 250 cm/s or higher, and the particles circulate when 10 cm/s or higher. Thus, the diameter b of the lower reactor 112 is formed to be greater than or equal to 1/5, which is the lower limit value, of the diameter a of the upper reactor 111, and thus, the particles may circulate while preventing the particle deviation.

Also, a height h2 of the lower reactor 112 may be 1/150 to 1/8 of the height h1 of the reactor body 110. Here, the height h2 of the lower reactor 112 and the height h1 of the reactor body 110 may be the height of a section in which the accommodation portion 114 is formed.

Meanwhile, each of the upper reactor 111 and the lower reactor 112 may have a constant diameter.

The distribution plate 120 is positioned below the accommodation portion 114 of the reactor body 110 and may distribute the reaction gas supplied to the accommodation portion 114.

Here, the distribution plate 120 may be positioned below the lower reactor 112.

Also, the distribution plate 120 may have a disk shape in which a plurality of distribution holes are formed.

The reaction gas flowing in from below the distribution plate 120 pass through the plurality of distribution holes, and then may be distributed to the accommodation portion 114 positioned above the distribution plate 120 by the distribution holes.

The catalyst supply unit 130 is connected to the lower reactor 112 and may supply the catalyst S to the lower reactor 112.

Also, the catalyst supply unit 130 may supply the catalyst S into the lower reactor 112 such that a height h3 of the catalyst S is formed to be less than the height h2 of the lower reactor 112. Here, the catalyst supply unit 130 may supply the catalyst such that the height h3 of the catalyst S is 1/150 to 1/10 of the total height h1 of the accommodation portion 114 of the reactor body 110.

Here, the catalyst is supplied such that the height h3 of the catalyst S prior to reaction is greater than or equal to 1/150, which is the lower limit value, of the total height h1 of the accommodation portion 114 of the reactor body 110, and thus, there are effects of making it possible to secure the temperature and the gas contact time. That is, when the height of the catalyst S is too low, it is difficult to secure the temperature because the amount of catalyst relative to the insulating area is large, and a time for which a gas passes through a catalyst layer is shortened, causing deterioration in reaction efficiency. Thus, there is an effect of making it possible to prevent these limitations.

Also, the catalyst is supplied such that the height h3 of the catalyst S prior to reaction is less than or equal to 1/10, which is the upper limit value, of the total height h1 of the accommodation portion 114 of the reactor body 110, and thus, there is an effect of making it possible to prevent the reactant from deviating from the reactor body 110.

In more detail, when a carbon nanotube (CNT), which is the reactant, grows from the catalyst S, the volume thereof grows 250 to 2500 times. When the diameter of the lower reactor 112 to the upper reactor 111 is considered to be 1/5 (cross-sectional area 1/25), the volume is 250 times * 1/25, and the upper limit value is calculated as 1/10. In this case, when the catalyst height is 1/10 or higher, the production is greater than or equal to the volume of the accommodation portion 114 of the reactor body 110. Thus, the catalyst is supplied such that the height h3 of the catalyst S prior to reaction is less than or equal to 1/10, which is the upper limit value, of the total height h1 of the accommodation portion 114 of the reactor body 110, thereby making it possible to prevent the production of reactant from being greater than or equal to the volume of the reactor body 110. The catalyst S may be made of one or more types of, for example, Fe, Co, Ni, Cu, Cr, and Mn.

The gas supply unit 140 is connected to a lower end of the lower reactor 112 and may supply the reaction gas to the lower reactor 112.

In addition, as the gas supply unit 140 supplies a reaction gas comprising a hydrocarbon-based raw material gas, carbon structures may be manufactured inside the accommodation portion 114 of the reactor body 110. Here, the carbon structures may be, for example, carbon nanotubes (CNT).

Also, the reaction gas may be, for example, at least one of nitrogen ($N_2$), ethylene ($C_2H_4$), acetylene, methane, and carbon monoxide.

Here, for example, when the reaction gas comprises ethylene, the gas supply unit 140 may supply an amount of ethylene into the reactor at 20 to 1000 ($m^3$/hr).

Meanwhile, the gas supply unit 140 may comprise a preheater. Here, the reaction gas may be preheated in a preheater S1 before supplied into the reactor body 110.

Referring to FIGS. 1 and 3, the collection unit 150 is connected to the lower reactor 112 and may collect a reactant P positioned inside the accommodation portion 114.

The collection unit 150 may comprise: a collection line 151 which is connected to the lower reactor 112 and collects the reactant P; and a storage tank 153 which is connected to the collection line 151 and stores the collected reactant P. Also, the collection unit 150 may further comprise a cooler 152 which is positioned on the collection line 151 and cools the reactant P.

Here, the high temperature reactant P accommodated in the reactor body 110 may be collected through the collection line 151, cooled by the cooler 152, and then stored in the storage tank 153.

The gas discharge unit 160 is connected to an upper portion of the upper reactor 111 and may discharge the reacted gas positioned in the accommodation portion 114 of the reactor body 110.

Here, the gas discharge unit 160 may be connected to the end or side surface of the upper portion of the upper reactor 111.

The carbon nanotube manufacturing apparatus 100 apparatus according to the first embodiment of the present invention may further comprise a heating unit, a heat exchanger 170, a cyclone 180, an incinerator 190, and a fine particle collection unit J.

The heating unit is provided on the outside of the reactor body 110 and may heat the reactor body 110 at a high temperature.

The heat exchanger 170 is connected to the gas discharge unit 160 provided above the reactor body 110 and may exchange heat with the gas that is discharged. That is, the high temperature gas discharged from the reactor body 110 is heat-exchanged, and the heat at a high temperature may be transferred to another device and used. Here, for example, the heat exchanger 170 comprises a steam pipe, and the heat may be transferred through the steam pipe and used to preheat the reaction gas when the gas supply unit 140 supplies the reaction gas.

The cyclone 180 is connected to the heat exchanger 170 and may separate fine particles (powder) and a gas from the heat-exchanged gas.

The incinerator 190 is connected to one side of the cyclone 180 and may incinerate the gas which has been separated in the cyclone 180.

The fine particle collection unit J is connected to the other side of the cyclone 180 and may collect the fine particles which have been separated in the cyclone 180.

With reference to FIG. 2, the operation of the carbon nanotube manufacturing apparatus 100 according to the first embodiment of the present invention will be described specifically with an example. When referring to (a) of FIG. 2, nitrogen is supplied to the accommodation portion 114 of the reactor body 110, the temperature of the reactor body 110 is raised by the heating unit, and the catalyst is supplied into the lower reactor 112 through the catalyst supply unit 130.

Also, referring to (b) of FIG. 2, ethylene is supplied to the accommodation portion 114 of the reactor body 110 and made to react with catalyst S at a high temperature.

Subsequently, referring to (c) of FIG. 2, the reacted reactant P may be collected from the accommodation portion 114 of the reactor body 110 through the collection unit 150.

Referring to FIGS. 1 and 2, the carbon nanotube manufacturing apparatus 100 having the above configuration according to the first embodiment of the present invention has the reactor body 110 which is constituted by: the lower reactor 112; the upper reactor 111 having the diameter greater than that of the lower reactor 112; and the expansion portion 113 which connects the upper reactor 111 to the lower reactor 112 and has the gradually expanding diameter. Thus, the carbon nanotubes may be manufactured by using only the catalyst S without the fluidized material for securing a temperature. In particular, the catalyst S is supplied to the lower reactor 112 having the diameter less than that of the upper reactor 111, and the reaction gas is supplied from below the lower reactor 112 via the distribution plate 120, and thus, it is easy to secure the reaction temperature. Accordingly, the carbon nanotube may be manufactured by using only the catalyst S, and thus, the usage rate of the reactor may be remarkably enhanced, and the difference in qualities between reactants P may be reduced. Also, the upper reactor 111 has a pipe larger than that of the lower reactor 112, and thus, the production amount in the reactor may be increased.

**<Preparation Example A1>**

A reactor body of the present invention is provided, which has a multi-stage shape and comprises: a lower reactor; an upper reactor having a diameter greater than that of the lower reactor; and an expansion portion which connects the upper reactor to the lower reactor and has a gradually expanding diameter. Here, each of the lower reactor and the upper reactor has a constant diameter. Nitrogen is supplied to a lower portion of the lower reactor, the temperature of the reactor body is raised by a heating unit, and a catalyst is supplied into the lower reactor through a catalyst supply unit. Here, the diameter of the lower reactor is 0.05 m, the diameter of the upper reactor is 0.1 m, and the height of the reactor body is 2 m. Also, the expansion portion expands at the height of 0.3 m.

Then, ethylene is supplied to the lower portion of the lower reactor and made to react with the catalyst at a high temperature, and thus, a reactant is generated.

Subsequently, the reacted reactant is collected from the inside of the reactor body via a collection unit.

Then, the processes from the catalyst injection operation were repeated, and accordingly, carbon nanotubes were manufactured.

Here, the reaction temperature is maintained at 700°C, the flow rate of ethylene is maintained at 5 [L/min], and the flow rate of nitrogen is maintained at 15 [L/min].

**<Preparation Example A2>**

The same processes as those in Preparation Example A1 were performed except that an amount of catalyst and a supply of ethylene were greater than those in Preparation Example 1.

**<Comparative Example A1>**

The same processes as those in Preparation Example A1 were performed except that: an existing reactor body having a constant diameter is used; and an inner fluidized material for securing a temperature is used. 1/3 of the entire volume of the reactor body was filled with the inner fluidized material.

**<Comparative Example A2>**

The same processes as those in Preparation Example A1 were performed except that an existing reactor body having a constant diameter is used.

**<Comparative Example A3>**

The same processes as those in Preparation Example A1 were performed except that: a reactor body of which a diameter in a lower portion is gradually expanded upward is used; and an inner fluidized material for securing a temperature is used. That is, the reactor body is formed in a single stage, and has a shape expanding in the lower portion.

**<Comparative Example A4>**

The same processes as those in Preparation Example A1 were performed except that a reactor body of which a diameter in a lower portion is gradually expanded upward is used. That is, the reactor body is formed in a single stage, and has a shape expanding in the lower portion.

**<Experimental Example 1>**

The production amount of carbon nanotubes, usage rate of the reactor, bulk density, purity, specific surface area, and the like were measured and shown in Table 1 below.

To obtain the bulk density, a metering cup was filled with the result material, and the weight thereof was measured. A value obtained by dividing the weight by the volume was used.

To obtain the purity, the CNT was heated at 700°C for 2 hours (h) under air atmosphere, and the weight of remnants was measured. (Initial weight - final weight) / initial weight * 100

The specific surface area was measured through a BET method.

[Table 1]

| | Preparation Example A1 | Preparation Example A2 | Comparative Example A1 | Comparative Example A2 | Comparative Example A3 | Comparative Example A4 |
|---|---|---|---|---|---|---|
| Diameter type of reactor | Diameter expansion | Diameter expansion | Diameter constant | Diameter constant | Diameter expansion in lower portion | Diameter expansion in lower portion |
| Number of reactor stages | Multi-stage | Multi-stage | Single stage | Single stage | Single stage expansion (expansio n in lower portion) | Single stage expansion (expansio n in lower portion) |
| Inner fluidized material [g] | - | - | 150 | - | 150 | - |
| Amount of catalyst [g] | 15 | 22.5 | 15 | 15 | 15 | 22.5 |
| Flow rate of ethylene [L/min] | 5 | 7.5 | 5 | 5 | 7.5 | 5 |
| Set temperature [°C] | 750 | 750 | 750 | 750 | 750 | 750 |
| Temperature of catalyst layer [°C] | 710 | 710 | 710 | 350 | 556 | 710 |
| Reaction + collection time [min] | 130 | 130 | 130 | 130 | 130 | 130 |
| Amount of production [g] | 280 | 415 | 276 | - | 258 | 50 |
| Bulk density [kg/m$^3$] | 37.2 | 37.5 | 37.1 | - | 37 | 23.6 |
| Purity [%] | 95.54 | 95,52 | 95.53 | - | 95.4 | 59 |
| Specific surface area [m$^2$/g] | 181 | 180 | 185 | - | 195 | 161 |
| Usage rate of reactor [%] | 100 | 100 | 66 | - | 66 | 100 |

As shown in Table 1, the usage rates of reactors in Comparative Example A1 and Comparative Example A3 are 66%, whereas Preparation Example A1 and Preparation Example A2 show 1000 of the usage rates of reactors.

Moreover, there was no reaction in Comparative Example A2. That is, in Preparation Example A1 and Preparation Example A2 manufactured according to the present invention, the reactors may be entirely used. However, in Comparative Example A1 and Comparative Example A3, the usage rates of reactors are only 66% due to the volumes occupied by the inner fluidized materials. Also, in Comparative Example A2 in which the reactor body is formed in a single stage shape having an entirely constant diameter and which does not have the inner fluidized material for securing a temperature, no reaction occurred, and thus, the CNT was not produced. However, in Preparation Example A1 and Preparation Example A2, it can be seen that a reaction occurs to produce the CNT even without the inner fluidized material for securing a temperature.

Meanwhile, as shown in Table 1, in Comparative Example A4 in which the reactor body is formed in a single stage shape, the lower portion is expanded, the inner fluidized material for securing a temperature is not used, the production amount of CNT is only 50 [g]. However, in Preparation Example A2 in which the reactor body is formed in a multi-stage provided with the expansion portion that gradually expands upward, it can be seen that the production amount of CNT is remarkably increased to 415 [g]. That is, it can be seen that the production amount of CNT increased about 8 to 10 times in Preparation Example A2 than in Comparative Example A4.

Specifically, in Comparative Example A4 which does not use the inner fluidized material and has the diameter expanding in the lower portion, the expansion occurs directly from the lowermost side of the reactor body. Thus, this type is unfavorable to heat transfer, and it can be seen that the production amount of CNT is only 50 [g]. That is, in Comparative Example A4, the linear velocity (cm/s) is changed from just above the distribution plate due to expansion when the reaction gas is supplied at the same volumetric flow rate ($cm^3$/s). Thus, a region above the dispersion plate is a section most vulnerable to cake (CNT aggregates) . Since the linear velocity decreases due to expansion, the formation of the cake (CNT aggregates) is accelerated. Consequently, the height of the initially injected catalyst layer decreases due to the increase in diameter, and thus, it can be seen that it is difficult to secure a temperature, and reactivity (production amount) decreases. Here, the principle of cake (CNT aggregates) formation will be described below in more detail. In a case where the reactor body is formed in an expansion shape with an expanding diameter, when gas enters from the bottom to the top due to inertia, the amount of gas flowing toward an inclined portion is relatively small, and the gas descends at a slow flow rate on a wall surface of the inclined portion. Due to this, stagnation of catalyst/carbon occurs, and unnecessary cake (carbon aggregates, CNT aggregates) is formed.

**Carbon nanotube manufacturing apparatus according to second embodiment**

Hereinafter, a carbon nanotube manufacturing apparatus according to a second embodiment of the present invention will be described.

Referring to FIGS. 1 to 3, a carbon nanotube manufacturing apparatus 100 according to a second embodiment of the present invention is a carbon nanotube manufacturing apparatus 100 comprising: a reactor body 110 having an accommodation portion 114; and a distribution plate 120 for distributing a reaction gas supplied to the accommodation portion 114 of the reactor body 110. The reactor body 110 comprises a lower reactor 112, an upper reactor 111, and an expansion portion 113. Also, the carbon nanotube manufacturing apparatus 100 according to the second embodiment of the present invention may further comprise: a catalyst supply unit 130 for supplying a catalyst S; a gas supply unit 140 for supplying the reaction gas; a collection unit 150 for collecting a reactant P; and a gas discharge unit 160 for discharging a gas.

The carbon nanotube manufacturing apparatus according to the second embodiment of the present invention is different from the above-described carbon nanotube manufacturing apparatus according to the first embodiment in that an inclination angle of the expansion portion 113 is specifically limited.

In more detail, referring to FIG. 1, the accommodation portion 114, which is a space in which a reaction occurs, may be formed inside the reactor body 110. Here, the reactor body 110 may be formed in a cylindrical shape.

The reactor body 110 may comprise: the upper reactor 111 having a diameter greater than that of the lower reactor 112; and the expansion portion 113 which connects the upper reactor 111 to the lower reactor 112 and has a gradually expanding diameter.

Referring to FIG. 1 and (b) of FIG. 2, a height h1 of the accommodation portion 114, which is the inner entire height of the reactor body 110, may be formed to be, for example, 1 m to 10 m, but the height h1 of the accommodation portion 114 of the present invention is not necessarily limited thereto.

A diameter a of the upper reactor 111 may be formed to be, for example, 2 m or less. Particularly, the diameter a of the upper reactor 111 may be formed to be 0.4 to 2 m. However, the diameter a of the upper reactor 111 of the present invention is not necessarily limited thereto.

A diameter b of the lower reactor 112 may be formed to be, for example, 1/2 or less of the diameter a of the upper reactor 111. Here, specifically, the diameter b of the lower reactor 112 may be formed to be, for example, 1/5 to 1/2 of the diameter a of the upper reactor 111.

Here, the diameter b of the lower reactor 112 is formed to be less than or equal to 1/2, which is the upper limit value, of the diameter a of the upper reactor 111, and thus, there is an effect of making it possible to secure a temperature.

Also, the diameter b of the lower reactor 112 is formed to be greater than or equal to 1/5, which is the lower limit value, of the diameter a of the upper reactor 111, and thus, there is an effect of preventing particle deviation. Particularly, when a gas flow rate increases, particles deviate from the lower reactor 112 and moves to the upper reactor 111. When the gas flow rate decreases, there is a problem that catalyst/CNT circulation does not occur. For the catalyst, typically, the particle deviation occurs when linear velocity of gas is 250 cm/s or higher, and the particles circulate when 10 cm/s or higher. Thus, the diameter b of the lower reactor 112 is formed to be greater than or equal to 1/5, which is the lower limit value, of the diameter a of the upper reactor 111, and thus, the particles may circulate while preventing the particle deviation.

Also, a height h2 of the lower reactor 112 may be 1/150 to 1/8 of the height h1 of the reactor body 110. Here, the height h2 of the lower reactor 112 and the height h1 of the reactor body 110 may be the height of a section in which the accommodation portion 114 is formed.

Meanwhile, each of the upper reactor 111 and the lower reactor 112 may have a constant diameter.

The expansion portion 113 is provided between the lower reactor 112 and the upper reactor 111 and may have an inclined surface 111a having a taper shape such that the diameter gradually increases in directions toward the lower reactor 112 and the upper reactor 111.

An inclination angle α of the expansion portion 113 may be formed, for example, at 5 to 45° with respect to a vertical direction V. Here, referring to FIG. 1, the vertical direction V represents a direction parallel to the straight line extending in the up-down direction and may be an extension direction of the upper reactor 111. That is, the inclination angle α of the expansion portion 113 may be the angle between the straight line in the vertical direction V and the inclined surface 113a of the expansion portion 113. Thus, the inclination angle α of the expansion portion 113 is formed to be 45° or less, and thus, it is possible to remarkably reduce a phenomenon in which the flow rate at the edge of the expansion portion 113 is lowered. Consequently, the generation amount of CNT aggregates generated due to the reduction in flow rate may be remarkably reduced. Also, since the generation amount of CNT aggregates may be reduced, the production amount of CNT may be remarkably increased. Moreover, the inclination angle α of the expansion portion 113 is formed to be 5° or more, and thus, the lower reactor 112 may be formed to have a diameter less than that of the upper reactor 111. Accordingly, heat transfer areas are sufficiently secured in the lower reactor 112, and thus, the reaction may occur only with injection of the catalyst.

Also, the inclination angle α of the expansion portion 113 may be formed, specifically, for example, at 5 to 30° with respect to the vertical direction V. Thus, the inclination angle α of the expansion portion 113 is formed to be 30° or less, and thus, it is possible to more remarkably reduce a phenomenon in which the flow rate at the edge of the expansion portion 113 is lowered.

Moreover, the inclination angle α of the expansion portion 113 may be formed, further specifically, for example, at 10 to 30° with respect to the vertical direction V.

The distribution plate 120 is positioned below the accommodation portion 114 of the reactor body 110 and may distribute the reaction gas supplied to the accommodation portion 114.

Here, the distribution plate 120 may be positioned below the lower reactor 112.

Also, the distribution plate 120 may have a disk shape in which a plurality of distribution holes are formed.

The reaction gas flowing in from below the distribution plate 120 pass through the plurality of distribution holes, and then may be distributed to the accommodation portion 114 positioned above the distribution plate 120 by the distribution holes.

The catalyst supply unit 130 is connected to the lower reactor 112 and may supply the catalyst S to the lower reactor 112.

Also, the catalyst supply unit 130 may supply the catalyst S into the lower reactor 112 such that a height h3 of the catalyst S is formed to be less than the height h2 of the lower reactor 112. Here, the catalyst supply unit 130 may supply the catalyst such that the height h3 of the catalyst S is 1/150 to 1/10 of the total height h1 of the accommodation portion 114 of the reactor body 110.

Here, the catalyst is supplied such that the height h3 of the catalyst S prior to reaction is greater than or equal to 1/150, which is the lower limit value, of the total height h1 of the accommodation portion 114 of the reactor body 110, and thus, there are effects of making it possible to secure the temperature and the gas contact time. That is, when the height of the catalyst S is too low, it is difficult to secure the temperature because the amount of catalyst relative to the insulating area is large, and a time for which a gas passes through a catalyst layer is shortened, causing deterioration in reaction efficiency. Thus, there is an effect of making it possible to prevent these limitations.

Also, the catalyst is supplied such that the height h3 of the catalyst S prior to reaction is less than or equal to 1/10, which is the upper limit value, of the total height h1 of the accommodation portion 114 of the reactor body 110, and thus, there is an effect of making it possible to prevent the reactant from deviating from the reactor body 110.

In more detail, when a carbon nanotube (CNT), which is the reactant, grows from the catalyst S, the volume thereof grows 250 to 2500 times. When the diameter of the lower reactor 112 to the upper reactor 111 is considered to be 1/5 (cross-sectional area 1/25), the volume is 250 times * 1/25, and the upper limit value is calculated as 1/10. In this case, when the catalyst height is 1/10 or higher, the production is greater than or equal to the volume of the accommodation portion 114 of the reactor body 110. Thus, the catalyst is supplied such that the height h3 of the catalyst S prior to reaction is less than or equal to 1/10, which is the upper limit value, of the total height h1 of the accommodation portion 114 of the reactor body 110, thereby making it possible to prevent the production of reactant from being greater than or equal to the volume of the reactor body 110. The catalyst S may be made of one or more types of, for example, Fe, Co, Ni, Cu, Cr, and Mn.

The gas supply unit 140 is connected to a lower end of the lower reactor 112 and may supply the reaction gas to the lower reactor 112.

In addition, as the gas supply unit 140 supplies a reaction gas comprising a hydrocarbon-based raw material gas, carbon structures may be manufactured inside the accommodation portion 114 of the reactor body 110. Here, the carbon structures may be, for example, carbon nanotubes (CNT).

Also, the reaction gas may be, for example, at least one of nitrogen ($N_2$), ethylene ($C_2H_4$), acetylene, methane, and carbon monoxide.

Here, for example, when the reaction gas comprises ethylene, the gas supply unit 140 may supply an amount of ethylene into the reactor at 20 to 1000 ($m^3$/hr).

Meanwhile, the gas supply unit 140 may comprise a preheater. Here, the reaction gas may be preheated in a preheater S1 before supplied into the reactor body 110.

Referring to FIGS. 1 and 3, the collection unit 150 is connected to the lower reactor 112 and may collect a reactant P positioned inside the accommodation portion 114.

The collection unit 150 may comprise: a collection line 151 which is connected to the lower reactor 112 and collects the reactant P; and a storage tank 153 which is connected to the collection line 151 and stores the collected reactant P. Also, the collection unit 150 may further comprise a cooler 152 which is positioned on the collection line 151 and cools the reactant P.

Here, the high temperature reactant P accommodated in the reactor body 110 may be collected through the collection line 151, cooled by the cooler 152, and then stored in the storage tank 153.

The gas discharge unit 160 is connected to an upper portion of the upper reactor 111 and may discharge the reacted gas positioned in the accommodation portion 114 of the reactor body 110.

Here, the gas discharge unit 160 may be connected to the end or side surface of the upper portion of the upper reactor 111.

The carbon nanotube manufacturing apparatus 100 apparatus according to the second embodiment of the present invention may further comprise a heating unit, a heat exchanger 170, a cyclone 180, an incinerator 190, and a fine particle collection unit J.

The heating unit is provided on the outside of the reactor body 110 and may heat the reactor body 110 at a high temperature.

The heat exchanger 170 is connected to the gas discharge unit 160 provided above the reactor body 110 and may exchange heat with the gas that is discharged. That is, the high temperature gas discharged from the reactor body 110 is heat-exchanged, and the heat at a high temperature may be transferred to another device and used. Here, for example, the heat exchanger 170 comprises a steam pipe, and the heat may be transferred through the steam pipe and used to preheat the reaction gas when the gas supply unit 140 supplies the reaction gas.

The cyclone 180 is connected to the heat exchanger 170 and may separate fine particles (powder) and a gas from the heat-exchanged gas.

The incinerator 190 is connected to one side of the cyclone 180 and may incinerate the gas which has been separated in the cyclone 180.

The fine particle collection unit J is connected to the other side of the cyclone 180 and may collect the fine particles which have been separated in the cyclone 180.

With reference to FIG. 2, the operation of the carbon nanotube manufacturing apparatus 100 according to the second embodiment of the present invention will be described specifically with an example. When referring to (a) of FIG. 2, nitrogen is supplied to the accommodation portion 114 of the reactor body 110, the temperature of the reactor body 110 is raised by the heating unit, and the catalyst is supplied into the lower reactor 112 through the catalyst supply unit 130.

Also, referring to (b) of FIG. 2, ethylene is supplied to the accommodation portion 114 of the reactor body 110 and made to react with catalyst S at a high temperature.

Subsequently, referring to (c) of FIG. 2, the reacted reactant P may be collected from the accommodation portion 114 of the reactor body 110 through the collection unit 150.

Referring to FIGS. 1 and 2, the carbon nanotube manufacturing apparatus 100 having the above configuration according to the second embodiment of the present invention has the reactor body 110 which is constituted by: the lower reactor 112; the upper reactor 111 having the diameter greater than that of the lower reactor 112; and the expansion portion 113 which connects the upper reactor 111 to the lower reactor 112 and has the gradually expanding diameter.

Thus, the carbon nanotubes may be manufactured by using only the catalyst S without the fluidized material for securing a temperature. In particular, the catalyst S is supplied to the lower reactor 112 having the diameter less than that of the upper reactor 111, and the reaction gas is supplied from below the lower reactor 112 via the distribution plate 120, and thus, it is easy to secure the reaction temperature. Accordingly, the carbon nanotube may be manufactured by using only the catalyst S, and thus, the usage rate of the reactor may be remarkably enhanced, and the difference in qualities between reactants P may be reduced. Also, the upper reactor 111 has a pipe larger than that of the lower reactor 112, and thus, the production amount in the reactor may be increased.

Particularly, the expansion portion 113 of the reactor body 110 may be formed such that the inclination angle is 5 to 45° with respect to the vertical direction, thereby reducing the flow rate reduction phenomenon at an edge region of the expansion portion 113. Thus, it is possible to reduce an amount of unnecessary CNT aggregates generated due to the decrease in flow rate, and accordingly, it is possible to prevent the production amount for CNT from being reduced. Here, the expansion portion 113 may be formed such that the inclination angle is 10 to 30° with respect to the vertical direction to minimize the decrease in flow rate, thereby remarkably reducing the amount of CNT aggregates.

**<Preparation Example B1>**

A reactor body of the present invention is provided, which has a multi-stage shape and comprises: a lower reactor; an upper reactor having a diameter greater than that of the lower reactor; and an expansion portion which connects the upper reactor to the lower reactor and has a gradually expanding diameter. Nitrogen is supplied to a lower portion of the lower reactor, the temperature of the reactor body is raised by a heating unit, and a catalyst is supplied into the lower reactor through a catalyst supply unit. Here, the diameter of the lower reactor is 0.05 m, the diameter of the upper reactor is 0.1 m, and the height of the reactor body is 2 m. Also, the expansion portion is expanded at the height of 0.3 m, and the expansion portion is expanded to have the inclination of 45° with respect to the vertical direction.

Then, ethylene is supplied to the lower portion of the lower reactor and made to react with the catalyst at a high temperature, and thus, a reactant is generated.

Subsequently, the reacted reactant is collected from the inside of the reactor body via a collection unit.

Then, the processes from the catalyst injection operation were repeated, and accordingly, carbon nanotubes were manufactured.

**<Preparation Example B2>**

The same processes as those in Preparation Example B1 were performed except that an expansion portion is expanded to have inclination of 30° with respect to the vertical direction.

**<Preparation Example B3>**

The same processes as those in Preparation Example B1 were performed except that an expansion portion is expanded to have inclination of 15° with respect to the vertical direction.

**<Preparation Example B4>**

The same processes as those in Preparation Example B1 were performed except that an expansion portion is expanded to have inclination of 10° with respect to the vertical direction.

**<Comparative Example B1>**

The same processes as those in Preparation Example B1 were performed except that: an existing reactor body formed in a single stage shape and having a constant diameter of 0.1 m is used; and an inner fluidized material for securing a temperature is used.

**<Comparative Example B2>**

The same processes as those in Preparation Example B1 were performed except that an existing reactor body formed in a single stage shape and having a constant diameter of 0.1 m is used. That is, the inner fluidized material for securing a temperature was not used, and the reactor body in a single stage shape according to the related art was used.

**<Comparative Example B3>**

The same processes as those in Preparation Example B1 were performed except that an expansion portion is expanded to have inclination of 60° with respect to the vertical direction.

**<Comparative Example B4>**

The same processes as those in Preparation Example B1 were performed except that: a reactor body of which a diameter in a lower portion is gradually expanded upward is used; and an inner fluidized material for securing a temperature is used. That is, the reactor body is formed in a single stage, and has a shape expanding in the lower portion.

**<Comparative Example B5>**

The same processes as those in Preparation Example B1 were performed except that a reactor body of which a diameter in a lower portion is gradually expanded upward is used. That is, the reactor body is formed in a single stage, and has a shape expanding in the lower portion.

**<Experimental Example 2>**

The production amount of carbon nanotubes (CNT), the amount of CNT aggregates, and the like were measured and shown in Table 1 below.

To obtain the bulk density, a metering cup was filled with the result material, and the weight thereof was measured. A value obtained by dividing the weight by the volume was used.

To obtain the purity, the CNT was heated at 700°C for 2 hours (h) under air atmosphere, and the weight of remnants was measured. (Initial weight - final weight) / initial weight * 100

The specific surface area was measured through a BET method.

[Table 2]

| | Prepara tion Example B1 | Prepara tion Example B2 | Prepara tion Example B3 | Prepara tion Example B4 | Compara tive Example B1 | Compara tive Example B2 | Compara tive Example B3 | Compara tive Example B4 | Compara tive Example B5 |
|---|---|---|---|---|---|---|---|---|---|
| Diamet er type of reacto r | Diamete r expansi on | Diamete r expansi on | Diamete r expansi on | Diamete r expansi on | Diamete r constan t | Diamete r constan t | Diamete r expansi on | Diamete r expansi on in lower portion | Diamete r expansi on in lower portion |
| Number of reacto r stages | Multi-stage | Multi-stage | Multi-stage | Multi-stage | Single stage | Single stage | Multi-stage | Single stage expansi on (expans ion in lower portion ) | Single stage expansi on (expans ion in lower portion ) |
| Angle of inclin ed portio n [°] | 45 | 30 | 15 | 10 | - | - | 60 | 45 | 45 |
| Inner fluidi zed materi al [g] | - | - | - | - | 150 | - | - | 150 | - |
| Amount of cataly st [g] | | 22.5 | 22.5 | 22.5 | 15 | 22.5 | 22.5 | 15 | 22.5 |
| Flow rate of ethyle ne [L/ min ] | | 7.5 | 7.5 | 7.5 | 5 | 5 | 7.5 | 5 | 7.5 |
| Set temper ature [°C] | 750 | 750 | 750 | 750 | 750 | 750 | 750 | 750 | 750 |
| Temper ature of cataly st layer [°C] | 710 | 710 | 710 | 710 | 710 | 710 | 710 | 710 | 556 |
| Reacti on + collec tion time [min] | 120 | 120 | 120 | 120 | 120 | 120 | 120 | 120 | 120 |
| Amount of produc tion [g] | 466 | 491 | 530 | 540 | 276 | - | 415 | 258 | 50 |
| Amount of CNT aggreg ates [g] | 7 | 4 | 2 | 2 | 4 | - | 10 | 5 | 8 |

(continued)

| | Prepara tion Example B1 | Prepara tion Example B2 | Prepara tion Example B3 | Prepara tion Example B4 | Compara tive Example B1 | Compara tive Example B2 | Compara tive Example B3 | Compara tive Example B4 | Compara tive Example B5 |
|---|---|---|---|---|---|---|---|---|---|
| Diamet er type of reacto r | Diamete r expansi on | Diamete r expansi on | Diamete r expansi on | Diamete r expansi on | Diamete r constan t | Diamete r constan t | Diamete r expansi on | Diamete r expansi on in lower portion | Diamete r expansi on in lower portion |
| Number of reacto r stages | Multi-stage | Multi-stage | Multi-stage | Multi-stage | Single stage | Single stage | Multi-stage | Single stage expansi on (expans ion in lower portion ) | Single stage expansi on (expans ion in lower portion ) |
| Bulk densit Y [kg/m$^3$ ] | 37 | 36.5 | 36.9 | 36.8 | 37.5 | - | 36.1 | 37 | 23.6 |
| Purity [%] | 95.6 | 95.9 | 96.3 | 96.4 | 95.4 | - | 95.5 | 95.4 | 59 |
| Specif ic surfac e area [m$^2$/g] | 184 | 178 | 182 | 181 | 185 | - | 180 | 195 | 161 |

As shown in Table 2, in Comparative Example B1, Comparative Example B4, and Comparative Example B5 in which each of the reactor bodies is formed in a single stage shape, the production amount of CNT is only 50 to 276 [g]. However, in Preparation Examples B1 to B4 in which each of the reactor bodies is formed in a multi-stage provided with the expansion portion that gradually expands upward, it can be seen that the production amount of CNT is remarkably increased to 466 to 540 [g].

Specifically, in Comparative Example B5 which does not use the inner fluidized material and has the diameter expanding in the lower portion, the expansion occurs directly from the lowermost side of the reactor body. Thus, this type is unfavorable to heat transfer, and it can be seen that the production amount of CNT is only 50 [g]. That is, in Comparative Example B5, the linear velocity (cm/s) is changed from just above the distribution plate due to expansion when the reaction gas is supplied at the same volumetric flow rate ($cm^3/s$). Thus, a region above the dispersion plate is a section most vulnerable to cake (CNT aggregates). Since the linear velocity decreases due to expansion, the formation of the cake (CNT aggregates) is accelerated. Consequently, the height of the initially injected catalyst layer decreases due to the increase in diameter, and thus, it can be seen that it is difficult to secure a temperature, and reactivity (production amount) decreases. Here, the principle of cake (CNT aggregates) formation will be described below in more detail. In a case where the reactor is formed in an expansion shape with an expanding diameter, when gas enters from the bottom to the top due to inertia, the amount of gas flowing toward an inclined portion is relatively small, and the gas descends at a slow flow rate on a wall surface of the inclined portion. Due to this, stagnation of catalyst/carbon occurs, and unnecessary cake (carbon aggregates, CNT aggregates) is formed.

In Comparative Example B2 in which the reactor body is formed in a single stage shape having an entirely constant diameter and which does not have the inner fluidized material, it can be seen that CNT was not produced. Thus, in Comparative Example B2, when the reactor body is formed in a single stage shape having a constant diameter, the CNT was not produced without the fluidized material for securing a temperature. However, in cases such as Preparation Examples B1 to B4 in which each of the reactor bodies is formed in a multi-stage provided with the expansion portion that gradually expands upward, it can be seen that the CNT was produced by using only the catalyst without the fluidized material for securing a temperature.

In addition, in Comparative Example B3 in which the reactor body is formed in a multi-stage and the expansion portion having a gradually expanding diameter has the inclination angle of 60°, the amount of CNT aggregates is as large as 10 [g]. However, in Preparation Examples B1 to B4 in which each of the reactor bodies is formed in a multi-stage and the expansion portion having a gradually expanding diameter has the inclination angle of 10 to 45°, it can be seen that the amount of CNT aggregates is remarkably reduced to 2 to 7 [g]. That is, it can be seen that the flow rate at an edge region of the expansion portion is lowered as the inclination angle of the expansion portion increases, and thus, the amount of CNT aggregates increases. Thus, it can be seen that Comparative Example B3 in which the inclination angle of the expansion portion is formed to be 60° has a production amount of CNT less than those of Preparation Examples B1 to B4 in which the inclination angle is formed to be 10 to 45°. Here, in Preparation Examples B2 to B4 in which the inclination angle of the expansion portion is formed to be 30° or less, it can be seen that the amount of CNT aggregates is more remarkably reduced to 2-4 [g].

**Carbon nanotube manufacturing apparatus according to third embodiment**

Hereinafter, a carbon nanotube manufacturing apparatus according to a third embodiment of the present invention will be described.

Referring to FIGS. 1 to 3, a carbon nanotube manufacturing apparatus 100 according to a third embodiment of the present invention is a carbon nanotube manufacturing apparatus 100 comprising: a reactor body 110 having an accommodation portion 114; and a distribution plate 120 for distributing a reaction gas supplied to the accommodation portion 114 of the reactor body 110. The reactor body 110 comprises a lower reactor 112, an upper reactor 111, and an expansion portion 113. Also, the carbon nanotube manufacturing apparatus 100 according to the third embodiment of the present invention may further comprise: a catalyst supply unit 130 for supplying a catalyst S; a gas supply unit 140 for supplying the reaction gas; a collection unit 150 for collecting a reactant P; and a gas discharge unit 160 for discharging a gas.

The carbon nanotube manufacturing apparatus according to the third embodiment of the present invention is different from the above-described carbon nanotube manufacturing apparatuses according to the first embodiment and the second embodiment in that a ratio of the diameter of the lower reactor 112 to the diameter of the upper reactor 111 is limited.

In more detail, referring to FIG. 1, the accommodation portion 114, which is a space in which a reaction occurs, may be formed inside the reactor body 110. Here, the reactor body 110 may be formed in a cylindrical shape.

The reactor body 110 may comprise: the upper reactor 111 having a diameter greater than that of the lower reactor 112; and the expansion portion 113 which connects the upper reactor 111 to the lower reactor 112 and has a gradually expanding diameter.

Referring to FIG. 1 and (b) of FIG. 2, a height h1 of the accommodation portion 114, which is the inner entire height of the reactor body 110, may be formed to be, for example, 1 m to 10 m, but the height h1 of the accommodation portion 114 of the present invention is not necessarily limited thereto.

A ratio of the diameter of the lower reactor 112 to the diameter of the upper reactor 111 may be, for example, 1/5 to 1/1.5. That is, the diameter b of the lower reactor 112 may be formed to be 1/5 to 1/1.5 of the diameter a of the upper reactor 111.

Here, the diameter b of the lower reactor 112 is formed to be less than or equal to 1/1.5, which is the upper limit value, of the diameter a of the upper reactor 111, and thus, there is an effect of making it possible to secure a temperature.

Also, the diameter b of the lower reactor 112 is formed to be greater than or equal to 1/5, which is the lower limit value, of the diameter a of the upper reactor 111, and thus, there is an effect of preventing particle deviation. Particularly, when a gas flow rate increases, particles deviate from the lower reactor 112 and moves to the upper reactor 111. When the gas flow rate decreases, there is a problem that catalyst/CNT circulation does not occur. For the catalyst, typically, the particle deviation occurs when linear velocity of gas is 250 cm/s or higher, and the particles circulate when 10 cm/s or higher. Thus, the diameter b of the lower reactor 112 is formed to be greater than or equal to 1/5, which is the lower limit value, of the diameter a of the upper reactor 111, and thus, the particles may circulate while preventing the particle deviation.

Meanwhile, the ratio of the diameter of the lower reactor 112 to the diameter of the upper reactor 111 may be, specifically for example, 1/3 to 1/2. That is, the diameter b of the lower reactor 112 may be formed to be 1/3 to 1/2 of the diameter a of the upper reactor 111. Here, the diameter b of the lower reactor 112 is formed to be less than or equal to 1/2, which is the upper limit value, of the diameter a of the upper reactor 111, and thus, there is an effect of making it remarkably easy to secure a temperature. Also, the diameter b of the lower reactor 112 is formed to be greater than or equal to 1/3, which is the lower limit value, of the diameter a of the upper reactor 111, and thus, there is a significant effect of preventing particle deviation.

Also, a height h2 of the lower reactor 112 may be, for example, 1/150 to 1/2 of the height h1 of the reactor body 110. Also, the height h2 of the lower reactor 112 may be, specifically for example, 1/150 to 1/8 of the height h1 of the reactor body 110, but the present invention is not limited thereto. Here, the height h2 of the lower reactor 112 and the height h1 of the reactor body 110 may be the height of a section in which the accommodation portion 114 is formed.

Meanwhile, each of the upper reactor 111 and the lower reactor 112 may have a constant diameter.

The expansion portion 113 is provided between the lower reactor 112 and the upper reactor 111 and may have an inclined surface 111a having a taper shape such that the diameter gradually increases in directions toward the lower reactor 112 and the upper reactor 111.

The distribution plate 120 is positioned below the accommodation portion 114 of the reactor body 110 and may distribute the reaction gas supplied to the accommodation portion 114.

Here, the distribution plate 120 may be positioned below the lower reactor 112.

Also, the distribution plate 120 may have a disk shape in which a plurality of distribution holes are formed.

The reaction gas flowing in from below the distribution plate 120 pass through the plurality of distribution holes, and then may be distributed to the accommodation portion 114 positioned above the distribution plate 120 by the distribution holes.

The catalyst supply unit 130 is connected to the lower reactor 112 and may supply the catalyst S to the lower reactor 112. Here, the catalyst supply unit 130 supplies the catalyst S to the lower reactor 112 and may form a fluidized bed of the catalyst S inside the lower reactor 112.

Also, the catalyst supply unit 130 may supply the catalyst S into the lower reactor 112 such that a height h3 of the fluidized bed of the catalyst S is formed to be less than the height h2 of the lower reactor 112.

The catalyst supply unit 130 may supply the catalyst S such that the height h3 of the fluidized bed of the catalyst S is, for example, 1/330 to 1/30 of a height h4 of the upper reactor 111. Here, the catalyst supply unit 130 may supply the catalyst S such that the height h3 of the fluidized bed of the catalyst S is, specifically for example, 1/200 to 1/50 of the height h4 of the upper reactor 111.

Here, the catalyst supply unit 130 supplies the catalyst such that the height h3 of the fluidized bed of the catalyst S prior to reaction is greater than or equal to 1/330, which is the lower limit value, of the height h4 of the upper reactor 111, and thus, there are effects of making it possible to secure the temperature and the gas contact time. That is, when the height of the fluidized bed of the catalyst S is too low, it is difficult to secure the temperature because the amount of catalyst relative to the insulating area is large, and a time for which a gas passes through the fluidized bed of the catalyst S is shortened, causing deterioration in reaction efficiency. Thus, there is an effect of making it possible to prevent these limitations.

Also, the catalyst supply unit 130 supplies the catalyst such that the height h3 of the fluidized bed of the catalyst S prior to reaction is less than or equal to 1/30, which is the upper limit value, of the height h4 of the upper reactor 111, and thus, there is an effect of making it possible to prevent the reactant from deviating from the reactor body 110.

**EP 4 261 185 A1**

The catalyst S may be made of one or more types of, for example, Fe, Co, Ni, Cu, Cr, and Mn.

The gas supply unit 140 is connected to a lower end of the lower reactor 112 and may supply the reaction gas to the lower reactor 112.

In addition, as the gas supply unit 140 supplies a reaction gas comprising a hydrocarbon-based raw material gas, carbon structures may be manufactured inside the accommodation portion 114 of the reactor body 110. Here, the carbon structures may be, for example, carbon nanotubes (CNT).

Also, the reaction gas may be, for example, at least one of nitrogen ($N_2$), ethylene ($C_2H_4$), acetylene, methane, and carbon monoxide.

Here, for example, when the reaction gas comprises ethylene, the gas supply unit 140 may supply an amount of ethylene into the reactor at 1.2 to 500 ($m^3$/hr).

Meanwhile, the gas supply unit 140 may comprise a preheater. Here, the reaction gas may be preheated in a preheater S1 before supplied into the reactor body 110.

Referring to FIGS. 1 and 3, the collection unit 150 is connected to the lower reactor 112 and may collect a reactant P positioned inside the accommodation portion 114.

The collection unit 150 may comprise: a collection line 151 which is connected to the lower reactor 112 and collects the reactant P; and a storage tank 153 which is connected to the collection line 151 and stores the collected reactant P. Also, the collection unit 150 may further comprise a cooler 152 which is positioned on the collection line 151 and cools the reactant P.

Here, the high temperature reactant P accommodated in the reactor body 110 may be collected through the collection line 151, cooled by the cooler 152, and then stored in the storage tank 153.

The gas discharge unit 160 is connected to an upper portion of the upper reactor 111 and may discharge the reacted gas positioned in the accommodation portion 114 of the reactor body 110.

Here, the gas discharge unit 160 may be connected to the end or side surface of the upper portion of the upper reactor 111.

The carbon nanotube manufacturing apparatus 100 apparatus according to the third embodiment of the present invention may further comprise a heating unit, a heat exchanger 170, a cyclone 180, an incinerator 190, and a fine particle collection unit J.

The heating unit is provided on the outside of the reactor body 110 and may heat the reactor body 110 at a high temperature.

The heat exchanger 170 is connected to the gas discharge unit 160 provided above the reactor body 110 and may exchange heat with the gas that is discharged. That is, the high temperature gas discharged from the reactor body 110 is heat-exchanged, and the heat at a high temperature may be transferred to another device and used. Here, for example, the heat exchanger 170 comprises a steam pipe, and the heat may be transferred through the steam pipe and used to preheat the reaction gas when the gas supply unit 140 supplies the reaction gas.

The cyclone 180 is connected to the heat exchanger 170 and may separate fine particles (powder) and a gas from the heat-exchanged gas.

The incinerator 190 is connected to one side of the cyclone 180 and may incinerate the gas which has been separated in the cyclone 180.

The fine particle collection unit J is connected to the other side of the cyclone 180 and may collect the fine particles which have been separated in the cyclone 180.

With reference to FIG. 2, the operation of the carbon nanotube manufacturing apparatus 100 according to the third embodiment of the present invention will be described specifically with an example. When referring to (a) of FIG. 2, nitrogen is supplied to the accommodation portion 114 of the reactor body 110, the temperature of the reactor body 110 is raised by the heating unit, and the catalyst S is supplied into the lower reactor 112 through the catalyst supply unit 130.

Also, referring to (b) of FIG. 2, ethylene is supplied to the accommodation portion 114 of the reactor body 110 and made to react with catalyst S at a high temperature.

Subsequently, referring to (c) of FIG. 2, the reacted reactant P may be collected from the accommodation portion 114 of the reactor body 110 through the collection unit 150.

Referring to FIGS. 1 and 2, the carbon nanotube manufacturing apparatus 100 having the above configuration according to the third embodiment of the present invention has the reactor body 110 which is constituted by: the lower reactor 112; the upper reactor 111 having the diameter greater than that of the lower reactor 112; and the expansion portion 113 which connects the upper reactor 111 to the lower reactor 112 and has the gradually expanding diameter. Thus, the carbon nanotubes may be manufactured by using only the catalyst S without the fluidized material for securing a temperature. In particular, the catalyst S is supplied to the lower reactor 112 having the diameter less than that of the upper reactor 111, and the reaction gas is supplied from below the lower reactor 112 via the distribution plate 120, and thus, it is easy to secure the reaction temperature. Accordingly, the carbon nanotube may be manufactured by using only the catalyst S, and thus, the usage rate of the reactor may be remarkably enhanced, and the difference in qualities between reactants P may be reduced. Also, the upper reactor 111 has a pipe larger than that of the lower reactor 112, and thus, the production amount in the reactor may be increased.

Particularly, the diameter ratio of the lower reactor 112 to the upper reactor 111 is formed to be 1/5 to 1/1.5, and thus, it is easier to secure the reaction temperature of the lower reactor 112, and the reaction gas contact time may be increased, thereby optimizing the production amount and production efficiency for CNT. Here, the diameter ratio of the lower reactor 112 to the upper reactor 111 is formed to be 1/3 to 1/2, and thus, it is remarkably easy to secure the reaction temperature of the lower reactor 112, and the reaction gas contact time may be further increased, thereby further optimizing the production amount and production efficiency for CNT. Ethylene selectivity efficiency may also be optimized.

**<Preparation Example C1>**

A reactor body of the present invention is provided, which has a multi-stage shape and comprises: a lower reactor; an upper reactor having a diameter greater than that of the lower reactor; and an expansion portion which connects the upper reactor to the lower reactor and has a gradually expanding diameter. Nitrogen is supplied to a lower portion of the lower reactor, the temperature of the reactor body is raised by a heating unit, and a catalyst is supplied into the lower reactor through a catalyst supply unit so as to form a catalyst fluidized bed. Here, the diameter ratio of the lower reactor to the upper reactor is 1/3, and the height of the catalyst fluidized bed is formed to be 1/77 of the height of the upper reactor. Here, the diameter of the lower reactor is formed to be 3 cm.

Then, ethylene is supplied to the lower portion of the lower reactor and made to react with the catalyst at a high temperature, and thus, a reactant is generated.

Subsequently, the reacted reactant is collected from the inside of the reactor body via a collection unit.

Then, the processes from the catalyst injection operation were repeated, and accordingly, carbon nanotubes were manufactured.

**<Preparation Example C2>**

The same processes as those in Preparation Example C1 were performed except that: the diameter ratio of the lower reactor to the upper reactor is 1/2; the height of the catalyst fluidized bed is formed to be 1/197 of the height of the upper reactor; and the diameter of the lower reactor is formed to be 5 cm.

**<Comparative Example C1>**

The same processes as those in Preparation Example C1 were performed except that: an existing reactor body formed in a single stage shape and having a constant diameter of 0.1 m is used; and an inner fluidized material for securing a temperature is used.

**<Comparative Example C2>**

The same processes as those in Preparation Example C1 were performed except that an existing reactor body formed in a single stage shape and having a constant diameter of 0.1 m is used. That is, the inner fluidized material for securing a temperature was not used, and the reactor body in a single stage shape according to the related art was used.

**<Experimental Example 3>**

The production amount of carbon nanotubes (CNT), the amount of CNT aggregates, and the like were measured and shown in Table 1 below.

To obtain the bulk density, a metering cup was filled with the result material, and the weight thereof was measured. A value obtained by dividing the weight by the volume was used.

To obtain the purity, the CNT was heated at 700°C for 2 hours (h) under air atmosphere, and the weight of remnants was measured. (Initial weight - final weight) / initial weight * 100

The specific surface area was measured through a BET method.

[Table 3]

| | Preparation Example C1 | Preparation Example C2 | Comparative Example C1 | Comparative Example C2 |
|---|---|---|---|---|
| Diameter type of reactor | Diameter expansion | Diameter expansion | Diameter constant | Diameter constant |
| Number of reactor stages | Multi-stage | Multi-stage | Single stage | Single stage |
| Inner fluidized material [g] | - | - | 150 | - |
| Amount of catalyst [g] | 15 | 15 | 9 | 15 |
| Height of injecting catalyst [cm] | 3.4 | 1.2 | 102 | 102 |
| Height ratio (h3/h4) of reactant fluidized bed | 1/76.9 | 1/197.2 | 1/2.4 | 1/2.4 |
| Diameter ratio (b/a) of reactor | 1/3 | 1/2 | 1/1 | 1/1 |
| Temperature of catalyst fluidized bed [°C] | 710 | 710 | 710 | 710 |
| Reaction time [min] | 120 | 120 | 70 | 120 |
| Amount of production [g] | 321 | 293 | 201 | - |
| Bulk density [$kg/m^3$] | 32.4 | 31.7 | 37.8 | - |
| Purity [%] | 95.5 | 95.1 | 95.7 | - |
| Specific surface area [$m^2/g$] | 190.2 | 195.4 | 183.7 | - |
| $C_2H_4$ selectivity (%) | 64 | 58 | 67 | - |

As shown in Table 3, in Comparative Example C2 which does not use the inner fluidized material and in which the reactor body is formed in a single stage shape, the production amount of CNT is just 0 [g]. However, in Preparation Example C1 and Preparation Example C2 which do not use the inner fluidized material and in which each of the reactor bodies is formed in a multi-stage provided with the expansion portion that gradually expands upward, it can be seen that the production amount of CNT is remarkably increased to 293 to 321 [g].

That is, in Comparative Example C2 in which the reactor body is formed in a single stage shape having an entirely constant diameter and which does not have the inner fluidized material, it can be seen that CNT was not produced. Thus, in Comparative Example C2, when the reactor body is formed in a single stage shape having a constant diameter, the CNT was not produced without the fluidized material for securing a temperature. However, in cases such as Preparation Examples C1 to 2 in which each of the reactor bodies is formed in a multi-stage provided with the expansion portion that gradually expands upward, it can be seen that the CNT was produced by using only the catalyst without the fluidized material for securing a temperature.

Also, in Comparative Example C1 which uses the inner fluidized material and in which the reactor body is formed in a single stage shape, the production amount of CNT is only 201 [g] due to the volume occupied by the inner fluidized material. That is, in Preparation Example C1 and Preparation Example C2 manufactured according to the present invention, the reactors may be entirely used, and the production amounts of CNT may be remarkably increased. However, in Comparative Example C1 according to the related art, it can be seen that the production amount of CNT was remarkably reduced due to the volume occupied by the inner fluidized material.

Carbon nanotube manufacturing method

The present invention provides a carbon nanotube manufacturing method using the carbon nanotube manufacturing apparatus described above. Specifically, the present invention provides a carbon nanotube manufacturing method using the carbon nanotube manufacturing apparatus, the carbon nanotube manufacturing method comprising: inputting a catalyst to the lower reactor (S1); raising inner temperatures of the lower reactor and the upper reactor (S2); and injecting a carbon source gas into the lower reactor (S3). The inner temperature of the upper reactor is higher than the inner temperature of the lower reactor.

A feature of the carbon nanotube manufacturing method provided by the present invention involves a method of synthesizing carbon nanotubes by using a fluidized bed reactor in which the upper reactor and the lower reactor are separated from each other as described above and which has a structure in which the diameter of the upper reactor is greater than the diameter of the lower reactor. The temperature in a region of the upper reactor is adjusted to differ from the temperature in a region of the lower reactor, and more specifically, the temperature in the region of the upper reactor is adjusted to be higher than the temperature in the region of the lower reactor. Thus, a sintering phenomenon of the catalyst is suppressed, and accordingly, the time for 1 cycle consumed to synthesize the carbon nanotube may be reduced, and the production amount produced per unit time may be increased.

More specifically, the inner temperature of the lower reactor is 500 to 800°C, preferably, 600 to 700°C. Also, the inner temperature of the upper reactor is 600 to 900°C, preferably, 700 to 800°C. When the temperature of the lower reactor is lower than the above described range, energy required for reaction is not sufficiently supplied, and thus, there may be difficulties in initiating the reaction. When the temperature of the lower reactor is higher than the above described range, sintering of the catalyst occurs, a dimension of the active site of the catalyst may be increased, and thus, the diameter of the finally manufactured carbon nanotube becomes too large. When the temperature of the upper reactor is lower than the above described range, there may be a problem that the reaction does not proceed smoothly as in the case of the temperature of the lower reactor described above. When the temperature of the upper reactor is higher than the above described range, there may be a problem that some of the synthesized carbon nanotubes are thermally decomposed, as well as the problem of catalyst sintering.

In the carbon nanotube manufacturing method of the present invention, a difference between the inner temperature of the upper reactor and the inner temperature of the lower reactor is 50 to 150°C, preferably, 70 to 130°C. When the difference between the inner temperature of the upper reactor and the inner temperature of the lower reactor is smaller than the above range, there is little technical advantage to setting the temperatures of the upper reactor and the lower reactor differently. Also, when the difference in inner temperatures is larger than the above range, the temperature of the catalyst particles, at which the carbon nanotubes grow, rapidly changes during the process of moving from the lower reactor to the upper reactor. Thus, agglomerates (cake) are formed inside the reactor, or amorphous carbon is formed, and thus, the quality of the finally obtained product may be uneven. Furthermore, in the present invention, unlike a case where the temperature of the lower reactor is lower than the temperature of the upper reactor, when the temperature of the lower reactor is higher than the temperature of the upper reactor, the catalyst sintering phenomenon in the initial stage of the reaction rapidly increases. Thus, the amount of carbon nanotubes produced per unit cycle is drastically reduced, and carbon nanotubes with low bulk density and specific surface area may be synthesized in terms of materials properties of the finally manufactured carbon nanotubes.

In the carbon nanotube manufacturing method of the present invention, a catalyst being input may be used without any particular limitation as long as it is known in the art to be used in manufacturing carbon nanotubes by using a fluidized bed reactor. The catalyst may be a heterogeneous catalyst made of a complex structure of an active metal and a support that can be typically used, and more specifically, a catalyst in the form of a supported catalyst or a coprecipitated catalyst may be used.

When a supported catalyst is used as the catalyst, the bulk density thereof is higher than that of a coprecipitated catalyst. Also, unlike the coprecipitated catalyst, the supported catalyst has small amounts of fine particles of 10 microns or less. Thus, it is possible to suppress the occurrence of agglomeration of fine particles, and it is possible to reduce the possibility of occurrence of fine particles due to abrasion that may occur during a fluidization process. Also, there is an advantage in that the reactor can be operated stably because the catalyst itself has excellent mechanical strength.

On the other hand, when a coprecipitated catalyst is used as the catalyst, the method for manufacturing the catalyst is simple. Also, there is an advantage in terms of manufacturing costs because costs of metal salts preferred as catalyst raw materials are low. In addition, there is an advantage that catalytic activity is high due to its wide specific surface area.

The catalyst may comprise at least one selected from Co, Fe, Ni, Mo, and V as an active component. More preferably, the catalyst may comprise at least one selected from Co, Fe, and Ni as a main catalyst component, and at least one or more selected from Mo and V as a cocatalyst component. When the above components are provided as active components, the activation energy of the carbon nanotube synthesis reaction is greatly lowered, and thus, the carbon nanotubes can be efficiently synthesized.

A carbon source gas injected in the carbon nanotube manufacturing method of the present invention is a carbon-containing gas which can be decomposed at a high temperature to form carbon nanotubes. As specific examples, various carbon-containing compounds such as aliphatic alkanes, aliphatic alkenes, aliphatic alkynes, and aromatic compounds may be used. More specifically, compounds such as methane, ethane, ethylene, acetylene, ethanol, methanol, acetone, carbon monoxide, propane, butane, benzene, cyclohexane, propylene, butene, isobutene, toluene, xylene, cumene, ethylbenzene, naphthalene, phenanthrene, anthracene, acetylene, formaldehyde, and acetaldehyde may be used.

In particular, when methane, ethane, carbon monoxide, acetylene, ethylene, propylene, propane, butane, and liquefied petroleum gas (LPG) that is a mixture are used as the carbon source gas, these materials have advantages in that they are easily introduced into the reactor and are excellent in terms of process economic feasibility.

In the carbon nanotube manufacturing method of the present invention, the linear velocity of the carbon source gas injected into the lower reactor may be 5 to 200 cm/s, preferably 10 to 20 cm/s. When the linear velocity of the carbon source gas injected into the lower reactor is too low, there may be a problem in that the catalyst particles remain in the lower reactor area for too long and cannot move to the upper reactor area. When the linear velocity of the carbon source gas is too high, the catalyst particles are transferred to the upper reactor area even though carbon nanotube growth in the lower reactor area is not sufficiently achieved, and accordingly, the finally obtained carbon nanotubes may not be sufficiently grown.

In the carbon nanotube manufacturing method of the present invention, the carbon source gas may be injected together with a fluidizing gas. The fluidizing gas is to further improve the fluidity of the carbon source gas and the catalyst particles, and a gas with little or no reactivity may be used as the fluidizing gas. Specifically, nitrogen gas or argon gas may be used as the fluidizing gas. Meanwhile, a ratio of flow rates between the carbon source gas and the fluidizing gas is 1:1 to 1:8, preferably 1:2 to 1:5. When the carbon source gas and the fluidizing gas are injected while satisfying the above described condition of the ratio of flow rates, the effect of improving the fluidity of the fluidizing gas may be maximized. If the fluidizing gas is input less than the above range, the above-described fluidity improvement effect may be small. When the amount of the fluidizing gas is input too much, the amount of the carbon source gas is relatively insufficient, and thus, there may be a problem in that the relative ratio of the carbon source gas contacting the catalyst surface is reduced.

The carbon nanotubes manufactured through the carbon nanotube manufacturing method of the present invention as described above may have a bulk density of 30 to 40 $kg/m^3$, preferably 33 to 37.5 $kg/m^3$. In addition, the specific surface area of the carbon nanotubes may be 200 $m^2/g$ or more, preferably 230 to 270 $m^2/g$. Also, the purity of the carbon nanotubes may be 95% or more, preferably 96% or more. The carbon nanotubes manufactured through the manufacturing method of the present invention have high bulk density, high specific surface area, and high purity, and thus exhibit excellent quality.

**<Preparation Example D1>**

A carbon nanotube manufacturing apparatus having a configuration as in FIG. 1 was prepared. In the prepared manufacturing apparatus, the diameter of the lower reactor is 0.05 m, the diameter of the upper reactor is 0.1 m, and the height of the reactor body is 2 m. The expansion portion is expanded at the height of 0.3 m. After 15 g of Co catalyst was charged in the fluidized bed reactor in the prepared manufacturing apparatus, ethylene gas was injected as a carbon source gas at a flow rate of 5 L/min, and nitrogen gas was injected as a flow rate of 15 L/min as a fluidizing gas. The linear velocity of the injected carbon source gas was 12 cm/s. In addition, a reaction was performed by heating the lower reactor and the upper reactor so that the temperature of the lower reactor was 650°C and the temperature of the upper reactor was 750°C. After the reaction was completed, the obtained carbon nanotubes were collected through the collection unit of the carbon nanotube manufacturing apparatus.

**<Preparation Example D2>**

Carbon nanotubes were obtained in the same manner as in Preparation Example D1, except that the temperature of the lower reactor is set to 650°C and the temperature of the upper reactor is set to 800°C.

**<Comparative Example D1>**

Carbon nanotubes were synthesized using a single-layered fluidized bed reactor according to the related art, not the carbon nanotube manufacturing apparatus according to FIG. 1. The specific shape of the fluidized bed reactor is in the form of a cylinder with a diameter of 0.1 m and a height of 2 m, and the total volume inside the reactor is larger than that used in Preparation Example. Unlike Preparation Example in which only catalyst particles were added to perform the reaction, the reaction was performed by charging 150 g of previously synthesized carbon nanotubes as an inner fluidized material so as to ensure the reaction temperature. In addition, the amount of catalyst to be used and the injection flow rates of ethylene and nitrogen gas were the same as in Preparation Example D1, and the inner temperature of the reactor was set to 750°C.

**<Comparative Example D2>**

This example was carried out in the same manner as in Comparative Example D1, but an operation of raising the temperature during the reaction was additionally performed so that the inner temperature of the reactor was 650°C in the initial stage and 750°C in the latter stage. The temperature raising time was set to 15 minutes after ethylene injection. After the ethylene supply was cut off, the temperature was raised, and the ethylene supply was resumed after the temperature raising was completed.

**<Comparative Example D3>**

This example was carried out in the same manner as in Preparation Example D1, except that the temperatures of the upper reactor and the lower reactor are equally set to 750°C.

**<Comparative Example D4>**

This example was carried out in the same manner as in Preparation Example D1. However, in contrast to Preparation Example D1, the temperature of the lower reactor was set to 750°C, and the temperature of the upper reactor was set to 650°C.

The structures of reactors and conditions of reaction used in the Preparation Examples and Comparative Examples are summarized in Table 4 below.

[Table 4]

| | Preparati on Example D1 | Preparati on Example D2 | Comparati ve Example D1 | Comparati ve Example D2 | Comparati ve Example D3 | Comparati ve Example D4 |
|---|---|---|---|---|---|---|
| Structure of reactor | Double stage | Double stage | Single layer | Single layer | Double stage | Double stage |
| Inner fluidized material [g] | - | - | 150 | 150 | - | - |
| Amount of catalyst [g] | 15 | 15 | 15 | 15 | 15 | 15 |
| Flow rate of ethylene [L/min] | 5 | 5 | 5 | 5 | 5 | 5 |
| Temperature of lower reactor [°C] | 650 | 650 | 750 | Initial period 350 | 750 | 750 |
| Temperature of upper reactor [°C] | 750 | 800 | | Latter period 750 | 750 | 650 |

**<Experimental Example 4> - Confirmation of material properties of manufactured carbon nanotubes**

The material properties of the carbon nanotubes manufactured in Preparation Examples and Comparative Examples were confirmed, and the measurement method for each material property is as follows.

1) Bulk density: After filling a cup with the carbon nanotubes having the confirmed volume according to ASTM B329-06, the bulk density was calculated by dividing the measured weight by the volume of the cup.

2) Purity: The obtained carbon nanotubes were heated in air at 700°C for 2 hours, and the weight of remnants was measured. The purity was calculated by putting the measured weight of remnants and the initial weight of the carbon nanotube into the following equation.

$$Purity = (initial\ weight - weight\ of\ remnants)\ /\ initial\ weight * 100\%$$

3) Specific surface area This value was measured by the BET method, and was measured using BELSorp-mini equipment (BEL Japan).

[Table 5]

|  | Preparati on Example D1 | Preparati on Example D2 | Comparati ve Example D1 | Comparati ve Example D2 | Comparati ve Example D3 | Comparati ve Example D4 |
|---|---|---|---|---|---|---|
| Bulk density [kg/m$^3$] | 36.0 | 40 | 37.5 | 34.5 | 35.1 | 30.1 |
| Purity [%] | 96.2 | 96.5 | 95.4 | 96.4 | 95.2 | 94.5 |
| Specific surface area [m$^2$/g] | 240 | 210 | 185 | 259 | 181 | 200 |

As shown in Table 5, the carbon nanotubes manufactured in Preparation Examples D1 and D2 of the present invention exhibited high bulk density, purity, and specific surface area. Among Preparation Examples D1 and D2, the temperature of the upper reactor was slightly higher in Preparation Example D2. Thus, when compared to Preparation Example D1, the bulk density of carbon nanotubes finally obtained was high, and the specific surface area was low. On the other hand, in the case of Comparative Example D1 synthesized using an existing reactor, the bulk density of the carbon nanotubes is higher than in Preparation Example D1 due to the carbon nanotubes initially introduced as the inner fluidized material, and the specific surface area is lower than in Preparation Example D1. Also, in the case of Comparative Example D2, in which an existing reactor was used, but an operation of raising the temperature during the reaction was additionally performed, carbon nanotubes having a bulk density and specific surface area similar to those of Preparation Example D1 were manufactured. However, as will be described later, Comparative Example D2 showed inferior results compared to Preparation Examples D1 and D2 in terms of productivity. In the case of Comparative Example D3 using the same reactor as those used in Preparation Examples of the present invention, but having the same temperatures of the upper reactor and the lower reactor, the advantage of dividing into the upper reactor and the lower reactor is relatively poor, and thus, carbon nanotubes similar to those of Comparative Example D1 were manufactured. Finally, in the case of Comparative Example D4, the same reactor as used in Preparation Example of the present invention is utilized, but the temperatures of the upper reactor and the lower reactor are set opposite to the Preparation Example of the present invention, and thus, the temperature of the lower reactor is high and the temperature of the upper reactor is set low. In this case, carbon nanotubes did not sufficiently grow due to sintering of the catalyst at the initial stage of the reaction, and accordingly, carbon nanotubes with low bulk density and low specific surface area were synthesized.

<Experimental Example 5> - Comparison of productivity of carbon nanotube manufacturing process

In the carbon nanotube manufacturing processes in Preparation Examples and Comparative Examples, the time (one cycle time) consumed until the reaction and collection are completed and the production amount per one cycle were measured. The time when the input of ethylene is initiated is set to a start point, and the time when the carbon nanotubes obtained after the reaction is completed are transferred to the collection unit is set to an end point. Also, the time consumed until the reaction and collection are completed is obtained by measuring a time consumed between the start point and the end point. The production amount per one cycle was obtained by measuring the mass of carbon nanotubes collected after completion of one cycle. However, in the case of Comparative Examples D1 and D2 in which the previously synthesized carbon nanotubes are input as the inner fluidized material, the production amount per one cycle was the remaining mass which is obtained by subtracting 150 g, which is the mass of the inner fluidized material input first, from the measured mass of carbon nanotubes. The measurement results were summarized in Table 6 below.

[Table 6]

| | Preparation Example | Preparation Example | Comparative Example | Comparative Example | Comparative Example | Comparative Example |
|---|---|---|---|---|---|---|
| | D1 | D2 | D1 | D2 | D3 | D4 |
| Time of one cycle [min] | 130 | 130 | 130 | 170 | 130 | 130 |
| Production amount per one cycle [g] | 290 | 310 | 280 | 280 | 280 | 210 |

As can be seen from Table 6, when the carbon nanotube manufacturing method according to the embodiment of the present invention is used, the time per one cycle is short, and the amount of carbon nanotubes produced in one cycle is large. Thus, it was confirmed that the production of the overall manufacturing processes is high. In Comparative Examples D1 and D3, the productivity was similar to Preparation Example of the present invention or slightly lower than that of Preparation Example, but as mentioned above, there is a problem in that the specific surface area is inferior in terms of the material properties of the produced carbon nanotubes. Comparative Example D2 is similar to Preparation Example in terms of the production amount per one cycle, but the time consumed in one cycle is about 30% longer than that of Preparation Example D1. Thus, when converted to the production amount per unit time, it was confirmed that there is a problem in that the productivity is greatly reduced.

Also, in the case of Comparative Example D4, the time per one cycle was as short as that of Preparation Example, but the production amount per one cycle was significantly inferior to those of the other Comparative Examples. Also, it was confirmed that the bulk density and specific surface area of the produced carbon nanotubes were lower than those of the carbon nanotubes manufactured in Preparation Example as mentioned above. From this, in manufacturing the carbon nanotubes using the fluidized bed reactor comprising upper and lower reactors and an expanding portion, it may be confirmed that productivity of the overall carbon nanotube manufacturing processes is maximized by appropriately controlling the temperatures of the upper and lower reactors without loss of material properties of carbon nanotubes.

Although the present invention has been described in detail through the specific embodiments, these are intended to specifically describe the present invention, and the present invention is not limited thereto. Various modifications can be made within the technical idea of the present invention by those with ordinary skill in the art.

Also, the specific protection scope of the invention can become apparent from the appended claims.

[Description of the Symbols]

100: Carbon nanotube manufacturing apparatus
110: Reactor body
111: Upper reactor
112: Lower reactor
113: Expansion portion
114: Accommodation portion
120: Distribution plate
130: Catalyst supply unit
140: Gas supply unit
150: Collection unit
151: Collection line
152: Cooler
153: Storage tank
160: Gas discharge unit
170: Heat exchanger
180: Cyclone
190: Incinerator
J: Fine particle collection unit
S: Catalyst
P: Reactant

**Claims**

1. A carbon nanotube manufacturing apparatus comprising:

    a reactor body formed in a cylindrical shape and having an accommodation portion which is a space in which a reaction occurs; and
    a distribution plate which is positioned below the accommodation portion of the reactor body and distributes a reaction gas supplied to the accommodation portion,
    wherein the reactor body comprises:

        a lower reactor;
        an upper reactor having a diameter greater than that of the lower reactor; and
        an expansion portion which connects the upper reactor to the lower reactor and has a gradually expanding diameter.

2. The carbon nanotube manufacturing apparatus of claim 1, further comprising a catalyst supply unit which is connected to the lower reactor to supply a catalyst to the lower reactor.

3. The carbon nanotube manufacturing apparatus of claim 1, wherein the distribution plate is positioned below the lower reactor.

4. The carbon nanotube manufacturing apparatus of claim 1, further comprising a gas supply unit which is connected to a lower end of the lower reactor to supply the reaction gas to the lower reactor.

5. The carbon nanotube manufacturing apparatus of claim 1, further comprising a collection unit which is connected to the lower reactor to collect a reactant positioned inside the accommodation portion.

6. The carbon nanotube manufacturing apparatus of claim 5, wherein the collection unit comprises:

    a collection line which is connected to the lower reactor and collects the reactant; and
    a storage tank which is connected to the collection line and stores the collected reactant.

7. The carbon nanotube manufacturing apparatus of claim 6, wherein the collection unit further comprises a cooler which is positioned on the collection line and cools the reactant.

8. The carbon nanotube manufacturing apparatus of claim 1, further comprising a gas discharge unit which is connected to an upper portion of the upper reactor and discharges the reacted gas positioned in the accommodation portion.

9. The carbon nanotube manufacturing apparatus of claim 1, wherein each of the upper reactor and the lower reactor has a constant diameter.

10. The carbon nanotube manufacturing apparatus of claim 1, wherein the diameter of the lower reactor is 1/5 to 1/2 of the diameter of the upper reactor.

11. The carbon nanotube manufacturing apparatus of claim 1, wherein the expansion portion has an inclination in which the diameter is gradually expanded, and
    an inclination angle of the expansion portion is 5 to 45° with respect to a vertical direction.

12. The carbon nanotube manufacturing apparatus of claim 11, wherein the inclination angle of the expansion portion is 10 to 30° with respect to the vertical direction.

13. The carbon nanotube manufacturing apparatus of claim 1, wherein a ratio of the diameter of the lower reactor to the diameter of the upper reactor is 1/5 to 1/1.5.

14. The carbon nanotube manufacturing apparatus of claim 13, wherein the ratio of the diameter of the lower reactor to the diameter of the upper reactor is 1/3 to 1/2.

15. The carbon nanotube manufacturing apparatus of claim 13, further comprising a catalyst supply unit which is connected to the lower reactor to supply a catalyst to the lower reactor.

16. The carbon nanotube manufacturing apparatus of claim 15, wherein the catalyst supply unit supplies the catalyst to the lower reactor to form a catalyst fluidized bed inside the lower reactor, and
the catalyst supply unit supplies the catalyst such that a height of the catalyst fluidized bed is 1/330 to 1/30 of a height of the upper reactor.

17. The carbon nanotube manufacturing apparatus of claim 16, wherein the catalyst supply unit supplies the catalyst such that the height of the catalyst fluidized bed is 1/200 to 1/50 of the height of the upper reactor.

18. A carbon nanotube manufacturing method using the carbon nanotube manufacturing apparatus of claim 1, the carbon nanotube manufacturing method comprising:

    inputting a catalyst to the lower reactor (S1);
    raising inner temperatures of the lower reactor and the upper reactor (S2); and
    injecting a carbon source gas into the lower reactor (S3),
    wherein the inner temperature of the upper reactor is higher than the inner temperature of the lower reactor.

19. The carbon nanotube manufacturing method of claim 18, wherein the inner temperature of the lower reactor is 500 to 800°C.

20. The carbon nanotube manufacturing method of claim 18, wherein the inner temperature of the upper reactor is 600 to 900°C.

21. The carbon nanotube manufacturing method of claim 18, wherein a difference between the inner temperature of the upper reactor and the inner temperature of the lower reactor is 50 to 150°C.

22. The carbon nanotube manufacturing method of claim 18, wherein the carbon source gas is one or more selected from the group consisting of methane, ethane, ethylene, acetylene, ethanol, methanol, acetone, carbon monoxide, propane, butane, benzene, cyclohexane, propylene, butene, isobutene, toluene, xylene, cumene, ethylbenzene, naphthalene, phenanthrene, anthracene, acetylene, formaldehyde, and acetaldehyde.

23. The carbon nanotube manufacturing method of claim 18, wherein a linear velocity of the carbon source gas injected into the lower reactor is 5 to 200 cm/s.

24. The carbon nanotube manufacturing method of claim 18, wherein the carbon source gas is injected together with a fluidizing gas.

25. The carbon nanotube manufacturing method of claim 24, wherein the fluidizing gas is a nitrogen gas or an argon gas.

26. The carbon nanotube manufacturing method of claim 24, wherein a ratio of flow rates between the carbon source gas and the fluidizing gas is 1:1 to 1:8.

27. A carbon nanotube manufactured by the carbon nanotube manufacturing apparatus of any one of claims 1 to 17.

100

FIG.1

( a )                    ( b )                    ( c )

FIG.2

100

FIG.3

## INTERNATIONAL SEARCH REPORT

| International application No. |
| --- |
| **PCT/KR2021/018803** |

**A.    CLASSIFICATION OF SUBJECT MATTER**

**C01B 32/162**(2017.01)i; **B01J 8/02**(2006.01)i

According to International Patent Classification (IPC) or to both national classification and IPC

**B.    FIELDS SEARCHED**

Minimum documentation searched (classification system followed by classification symbols)

C01B 32/162(2017.01); B01J 19/00(2006.01); B82B 3/00(2006.01); B82Y 40/00(2011.01); C01B 31/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 탄소 나노 튜브(carbon nano tube), 촉매(catalyst), 유동층(fluidized bed), 온도 (temperature), 반응기(reactor)

**C.    DOCUMENTS CONSIDERED TO BE RELEVANT**

| Category* | Citation of document, with indication, where appropriate, of the relevant passages | Relevant to claim No. |
| --- | --- | --- |
| X | KR 10-2009-0027377 A (SEMES CO., LTD.) 17 March 2009 (2009-03-17) See claims 1-10; paragraphs [0013] and [0020]-[0050]; and figures 1-6. | 1-17,27 |
| Y | | 18-26 |
| Y | JP 2003-286015 A (OSAKA GAS CO., LTD.) 07 October 2003 (2003-10-07) See paragraphs [0040]-[0055]; and figure 1. | 18-26 |
| A | KR 10-2095517 B1 (LG CHEM, LTD.) 01 April 2020 (2020-04-01) See entire document. | 1-27 |
| A | KR 10-1359415 B1 (KOREA KUMHO PETROCHEMICAL CO., LTD.) 06 February 2014 (2014-02-06) See entire document. | 1-27 |
| A | KR 10-1102814 B1 (CHEIL INDUSTRIES INC.) 05 January 2012 (2012-01-05) See entire document. | 1-27 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 March 2022** | **18 March 2022** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

| | | | | |
|---|---|---|---|---|
| INTERNATIONAL SEARCH REPORT<br>**Information on patent family members** | | | International application No.<br>**PCT/KR2021/018803** | |

| Patent document<br>cited in search report | Publication date<br>(day/month/year) | Patent family member(s) | Publication date<br>(day/month/year) |
|---|---|---|---|
| KR    10-2009-0027377    A | 17 March 2009 | KR          10-0985724    B1 | 07 October 2010 |
| JP          2003-286015    A | 07 October 2003 | JP                3816017    B2 | 30 August 2006 |
| KR          10-2095517    B1 | 01 April 2020 | KR  10-2017-0119372    A | 27 October 2017 |
| KR          10-1359415    B1 | 06 February 2014 | KR  10-2009-0011792    A | 02 February 2009 |
| KR          10-1102814    B1 | 05 January 2012 | KR  10-2010-0073149    A | 01 July 2010 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200173069
- WO 1020210171323 A
- WO 1020210171324 A

- WO 1020210171325 A
- WO 1020210171133 A
- KR 1020100108599